# EUROPÄISCHE PATENTANMELDUNG

(11) **EP 1 214 875 A1**
(43) Veröffentlichungstag der Anmeldung: **19.06.2002**
(21) Anmeldenummer: 01129055.8
(22) Anmeldetag: 07.12.2001
(51) Int. Cl.: A01F 15/07, A01F 15/08

(54) **Rundballenpresse**

(30) Priorität: 18.12.2000 DE 10063122
(71) Anmelder: DEERE & COMPANY, Moline, Illinois 61265-8098 (US)
(72) Erfinder: Lucand, Philippe, 70120 Melin (FR); Viaud, Jean, 70100 Gray (FR)
(74) Vertreter: Magin, Ludwig Bernhard

(57) **Zusammenfassung**

2.1. Bekannte Rundballenpressen weisen einen Rahmen und eine Klappe auf, die einen Preßraum umfassen, in dem ein Rundballen gebildet wird. Zum Auswerfen des Rundballens aus dem Preßraum wird die Klappe angehoben und in einem angehobenen Zustand gehalten, bis die weiter bewegte Rundballenpresse den auf dem Boden liegenden Rundballen passiert hat. Es ist ein Nachteil, daß die Klappe sehr weit angehoben werden muß, da dies die Pressenleistung reduziert.
2.2. Es wird eine Rundballenpresse (10) vorgeschlagen, bei der der Rahmen (12) und die Klappe (14) in einer Trennungsebene (98) aufeinander treffen, die erheblich geneigt zum Boden verläuft.
2.3. Rundballenpressen werden in der Landwirtschaft eingesetzt.

## Beschreibung

Die Erfindung betrifft eine Rundballenpresse mit einem Rahmen und einer vertikal schwenkbar an diesem angebrachten Klappe, in denen ein Preßraum gebildet wird, der teilweise von einem Zugmittel umfaßt wird, das über mehrere Rollen geführt ist.

Die DE-A1-43 08 646 offenbart eine Rundballenpresse mit einem größenveränderlichen Preßraum, der vorne von einem Rahmen und hinten von einem aufklappbaren Gehäuse gebildet wird. Zwischen dem Rahmen und dem aufklappbaren Gehäuse ergibt sich eine Trennungsebene, von der das aufklappbare Gehäuse weggeschwenkt werden kann, um einen in dem Preßraum gebildeten Rundballen aus dem Preßraum entlassen zu können. Eine Achse zum Tragen der Rundballenpresse auf dem Boden befindet sich hinter der Trennungsebene.

Das der Erfindung zugrunde liegende Problem wird darin gesehen, daß es zu lange dauert, bis das aufklappbare Gehäuse in eine Stellung gebracht ist, in der der bis zu 1,8 Meter hohe Rundballen aus dem Preßraum entweichen kann und die Rundballenpresse mit angehobenem aufklappbaren Gehäuse weiter gefahren werden kann, ohne daß es zu einer Kollision zwischen dem aufklappbaren Gehäuse und dem Rundballen kommt.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann die untere bewegliche Rolle, die zugleich die untere und vordere Kante der Klappe bildet, an der der abgelegte Rundballen anstoßen würde, von einer Stellung, in der sie den Preßraum klein hält, um den Preßbeginn zu erleichtern, in eine Stellung gebracht werden, in der sie sich so weit hinten und von dem Einlaß entfernt befindet, daß der Rundballen schon beim geringen Anheben der Klappe aus dem Preßraum herausrollen kann. Dabei bleibt stets eine ausreichende und kompakte Führung des Rundballens in der Ballenstartphase erhalten, da die untere Rolle zum Führen eines Zugmittels in verschiedenen Stellungen gebracht werden und stets eine der Größe des Preßraums angepaßte Lage einnehmen kann. Bei dem Zugmittel kann es sich um Riemen, einen Stabkettenförderer, ein Förderband oder dergleichen handeln.

Wenn die Trennungsebene zwischen dem Rahmen und der Klappe nach hinten, also zu der Auswurföffnung hin, abfallend verläuft, befindet sich die rückwärtige untere Kante der Klappe, die bei der Weiterfahrt der Rundballenpresse an den abgelegten Rundballen anstoßen könnte, weit hinter der Achse bzw. der Kante, über die der Rundballen herausrollt, und die Klappe braucht den Rundballen im wesentlichen nicht mehr unten, sondern nur in dessen rückwärtigen Bereich freizugeben. Da die Klappe also nicht mehr soweit angehoben werden muß, reduziert sich die Zeit zum Auswerfen des Rundballens um ein weiteres, was zu einer höheren Betriebsleistung der Rundballenpresse führt. Es spielt hierbei keine Rolle, ob es sich um einen in der Größe veränderbaren oder starren Preßraum handelt und von welchen Preßelementen er umgeben ist. Die Trennungsebene verläuft einerseits im wesentlichen durch ein den Rahmen mit der Klappe verbindendes Lager und andererseits durch den Endbereich eines dem Rahmen zugeordneten Bodenförderers oder verläuft sogar hinter diesem.

Die Auswurföffnung wird noch dadurch vergrößert, daß ein Bodenförderer, zwischen dem und der Klappe sich die Auslaßöffnung ergibt, in der Auswurfrichtung abfallend verläuft und sich dem Boden nähert. Auf diese Weise braucht die Klappe weniger angehoben zu werden, um denselben Auslaßquerschnitt zu erreichen.

Der Rundballen bewegt sich während seiner Bildung aufgrund des sich vergrößernden Durchmessers zu der Auslaßöffnung hin, wenn er an der gegenüberliegenden Wand einen Widerstand erfährt, den er nicht überwinden kann. Dieser Widerstand kann von Walzen aufgeboten werden, die ortsfest aber drehbar gelagert sind, wobei eine gewisse Anpassung an die Lage und Größe des Rundballens dadurch erfolgen kann, daß ein die Walzen haltender Träger schwenkbar ist.

Wenn der Träger mit den darauf befindlichen Walzen nicht um einen Endbereich, sondern um eine Schwenkachse schwenkbar ist, die sich z. B. in der Mitte oder ungefähr in der Mitte befindet, ergibt sich ein Wippeneffekt, der ab einem bestimmten Durchmesser des Rundballens dazu führt, daß der Rundballen von dem Träger zu der Auslaßöffnung hin bewegt wird.

Der Bodenförderer kann je nach dem zu erwartenden aufzunehmenden Gewicht, der Art des zu pressenden Guts und dergleichen wahlweise aus mehreren parallel zueinander verlaufenden drehbaren Tragrollen, aus parallel zueinander verlaufenden Riemen oder aus einem Bandförderer gebildet werden.

Wenn der Bodenförderer vertikal schwenkbar ist, kann er in eine Lage gebracht werden, in der er sich bis auf den Boden absenkt und somit gleichzeitig zum Anheben der Klappe eine Auslaßöffnung freigibt, was zu einem weiteren Zeitvorteil führt.

Dadurch, daß das Zugmittel zwischen zwei auf dem Träger drehbar aufgenommenen Walzen hindurchgeführt ist und auf einer Rolle teilumfangsmäßig aufliegt, erfolgt die Verstellung des Trägers stets in Abhängigkeit von der Spannung in dem Zugmittel, wodurch eine hohe Dichte in dem Rundballen erzeugt werden kann.

Eine Kollision zwischen einem die bewegliche Rolle tragenden Arm und dem Rundballen in seinem Endzustand wird dadurch vermieden, daß ein die bewegliche Rolle tragender Arm gekrümmt, geknickt, abgewinkelt, gebogen oder dergleichen ist, wobei sich ein Innenraum ergibt, in dem der Rundballen aufgenommen werden kann.

Die Verwendung eines einzigen Zugmittelsatzes anstatt zweier oder dreier hat den Vorteil, daß nur ein Antrieb erforderlich ist und sich zwischen den Trumen keine Spalte oder dergleichen ergeben, in denen sich Preßgut ansammeln und eine Betriebsstörung verursachen könnte.

Die Führung des Zugmittels derart, daß sich ein einziges Trum zwischen der beweglichen Rolle und einer oberen Walze auf dem Träger erstreckt, bewirkt, daß sich gerade in der kritischen Ballenstartphase kein Erntegut in den Freiraum zwischen zwei Zugmitteln einsetzt.

In der Zeichnung sind drei nachfolgend näher beschriebene Ausführungsbeispiele der Erfindung dargestellt. Es zeigt:
- Fig. 1: eine Rundballenpresse nach einem ersten Ausführungsbeispiel, in dem ein teilweise gefüllter Preßraum von einem Zugmittel und lagefesten Walzen umgeben ist,
- Fig. 2: die Rundballenpresse nach Figur 1 mit einem vollkommen gefüllten Preßraum,
- Fig. 3: einen Ausschnitt einer Rundballenpresse nach einem zweiten Ausführungsbeispiel, in dem ein teilweise gefüllter Preßraum von einem Zugmittel und Walzen umgeben ist, die auf einem schwenkbaren Träger befestigt sind, und
- Fig. 4: einen Ausschnitt einer Rundballenpresse nach einem dritten Ausführungsbeispiel mit einem aus mehreren Tragrollen gebildeten Bodenförderer.

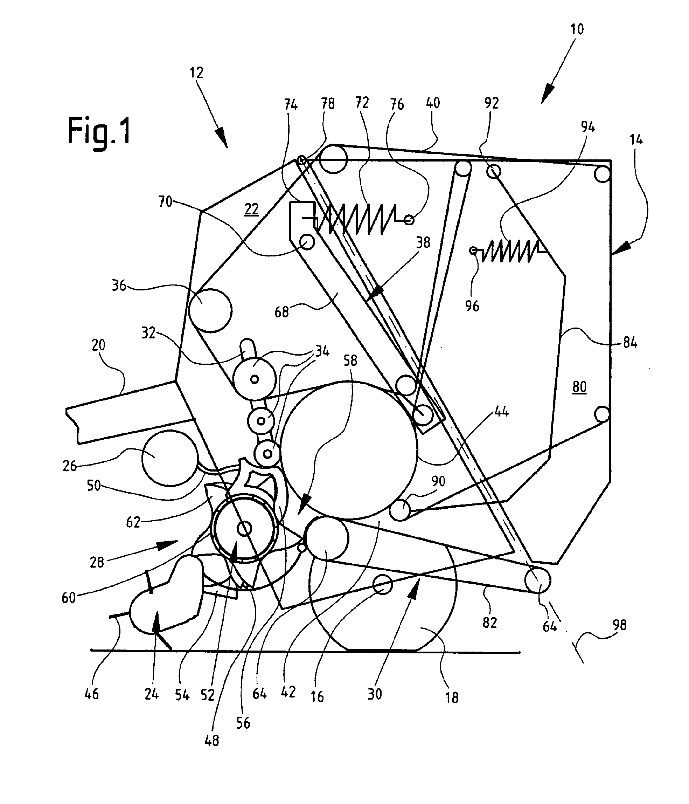

Figur 1 zeigt eine Rundballenpresse 10 mit einem vorderen Rahmen 12 und einer rückwärtigen Klappe 14.

Die Rundballenpresse 10 dient in herkömmlicher Weise dazu, gemähtes Erntegut aufzunehmen und zu Rundballen zu pressen, deren Größe variabel ist.

Der Rahmen 12 enthält eine Achse 16 mit Rädern 18, eine Deichsel 20 und Seitenwände 22 und trägt einen Aufnehmer 24, einen Förderer 26, ein Schneidwerk 28, einen Bodenförderer 30, einen Träger 32 mit Walzen 34, Rollen 36, eine Spannvorrichtung 38 und Zugmittel 40. Der Rahmen 12 stützt sich mittels der Achse 16 und der Räder 18 auf dem Boden ab, so daß die Rundballenpresse 10 von einem nicht gezeigten Zugfahrzeug über ein Feld gezogen werden kann.

Die Deichsel 20 ist mit dem Rahmen 12 starr, nachgiebig oder verstellbar angeordnet und dient dem Anschluß an das Zugfahrzeug. Die Seitenwände 22 sind starr auf dem Rahmen 12 befestigt und begrenzen einen Preßraum 42 für einen Rundballen 44 seitlich.

Der Aufnehmer 24 ist in herkömmlicher Weise als eine Pick-Up ausgebildet, die die gleiche oder eine größere Breite als der Preßraum 42 aufweist. Der Aufnehmer 24 nimmt mit oberschlächtig fördernden Zinken 46 Erntegut vom Boden auf und bewegt es entlang einer nicht näher bezeichneten Förderfläche zu dem Schneidwerk 28, von wo aus es in den Preßraum 42 eingespeist wird.

Der Förderer 26 arbeitet unterschlächtig und ist als Rotor ausgebildet, der dabei hilft, das von dem Aufnehmer 24 herangeführte Gut in das Schneidwerk 28 einzuspeisen. Der Förderer 26 kann eine glatte Oberfläche aufweisen oder mit Mitnehmern, Zinken, Zähnen, Rippen, Schnecken oder dergleichen besetzt sein.

Das Schneidwerk 28 enthält einen Boden 48, einen Deckel 50, einen Rotor 52, Messer 54 und Abstreifer 56, wie dies an sich bekannt ist. Das Schneidwerk 28 ist für die Erfindung nicht wichtig, sondern nur bei diesem Ausführungsbeispiel zusätzlich mit angeführt; insbesondere können die Messer 54 entfallen, so daß der Rotor 52 als ein einfacher Förderer wirkt. Wenn das Schneidwerk 28 vorhanden ist, dient es dazu, von dem Aufnehmer 24 herangeführtes Gut zu zerkleinern, so daß es in dem Preßraum 42 besser verdichtet werden kann.

Der Boden 48 erstreckt sich zwischen dem Aufnehmer 24 und dem Bodenförderer 30 und nimmt eine Krümmung ein, die im wesentlichen dem Radius des Rotors 52 folgt.

Der Deckel 50 erstreckt sich mit gleicher Krümmung zwischen dem Förderer 26 und dem Träger 32, bzw. einer an seinem unteren Endbereich angeordneten Walze 34. Stromaufwärts des Rotors 52 bilden der Boden 48 und der Deckel 50 eine Aufnahmeöffnung und stromabwärts von ihm bilden sie einen Einlaß 58 des Preßraums 42, der zugleich von der unteren Walze 34 und dem Bodenförderer 30 begrenzt wird. Der Einlaß 58 befindet sich beim Blick auf die Rundballenpresse 10 von links im ersten Quadranten des Rotors 52 und somit im wesentlichen seitlich von ihm.

Der Rotor 52 weist ein Zentralrohr 60 und nachlaufend gekrümmte auf das Zentralrohr 60 aufgesetzte Mitnehmer 62 auf. Das Zentralrohr 60 wird mittels eines nicht gezeigten Antriebs im Uhrzeigerdrehsinn angetrieben, wenn man die Rundballenpresse 10 von der linke Seite betrachtet. Die Mitnehmer 62 sind im wesentlichen dreiecksförmig und reichen mit einer Spitze bis nahezu an den Boden 48 und den Deckel 50. Insgesamt sind fünf Reihen Mitnehmer 62 in Schraubenlinienform auf das Zentralrohr 60 aufgeschweißt oder aufgeschraubt, wobei die Mitnehmer 62 in der Axialrichtung des Rotors 52 einen Abstand zueinander aufweisen. Der Durchmesser des Rotors 52 ist von beträchtlicher Größe und nimmt ca. 0,6 m ein.

Die Messer 54 sind in herkömmlicher Weise ausgebildet und können vorzugsweise in verschiedenen Stellungen arretiert werden und bei Überlast ausweichen. Die Messer 54 erstrecken sich durch nicht sichtbare Schlitze im Boden 48 in alle oder einen Teil der Zwischenräume zwischen den Mitnehmern 62. Die Messer 54 werden von einem gemeinsamen verstellbaren aber nicht gezeigten Träger gehalten und können sich in einer Endstellung bis zu dem Zentralrohr 60 und in einer anderen Endstellung bis an die Innenkante des Bodens 48 erstrecken. Wie bereits erwähnt, können die Messer 54 auch entfallen, so daß der Rotor 52 nicht als schneidender, sondern nur als fördernder Rotor 52 wirkt. Die Messer 54 befinden sich unterhalb des Rotors 52 und stromaufwärts des Einlasses 58; sie könnten auch oberhalb des Rotors 52 angeordnet sein, wenn dieser oberschlächtig fördernd ausgebildet ist.

Die Abstreifer 56 befinden sich stromabwärts der Messer 54 und ebenfalls in den Zwischenräumen zwischen den Mitnehmern 62. Eine dem Preßraum 42 zugelegene Kante der Mitnehmer 62 verläuft nahezu senkrecht und geringfügig gebogen. Die Abstreifer 56 grenzen einerseits an das Zentralrohr 60 und andererseits an die untere Walze 34 auf dem Träger 32 an, wobei sie deren Kontur sehr eng folgen. Die Lage der Abstreifer 56 ist so gewählt, daß sich der Rundballen 44 stets an ihnen gegen eine nach vorne gerichtete Bewegung abstützen kann, und sie verschließen somit den Einlaß 58 zu einem gewissen Teil.

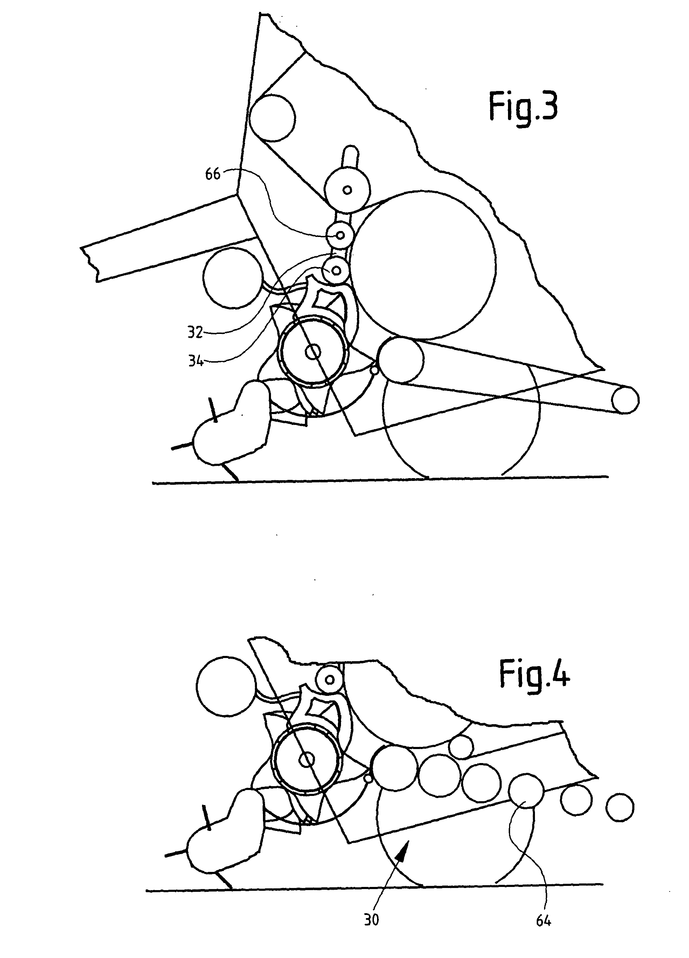

Der Bodenförderer 30 wird in dem Ausführungsbeispiel nach den Figuren 1 bis 3 von zwei Tragrollen 64 gebildet, die ortsfest aber drehbar in dem Rahmen 12 bzw. dessen Seitenwänden 22 gelagert sind und die von einem Zugmittel 82 umschlungen werden. Die rückwärtige Tragrolle 64 liegt tiefer als die vordere Tragrolle 64, befindet sich aber noch oberhalb der Achse 16. Auf den beiden Tragrollen 64 und dem Zugmittel 82 ergibt sich eine abfallende Förderfläche. Anstatt der beiden Tragrollen 64 und des Zugmittels 82 könnten auch mehr oder weniger Tragrollen, ein Kettenförderer, ein Bandförderer oder dergleichen verwendet werden -s. Figur 4. Der Bodenförderer 30 begrenzt den Preßraum 42 in seinem unteren Bereich auf einem Teil seines Umfangs, wobei der Teil mit wachsender Größe des Rundballens 44 zunimmt. Die Tragrollen 64 sind vorzugsweise angetrieben.

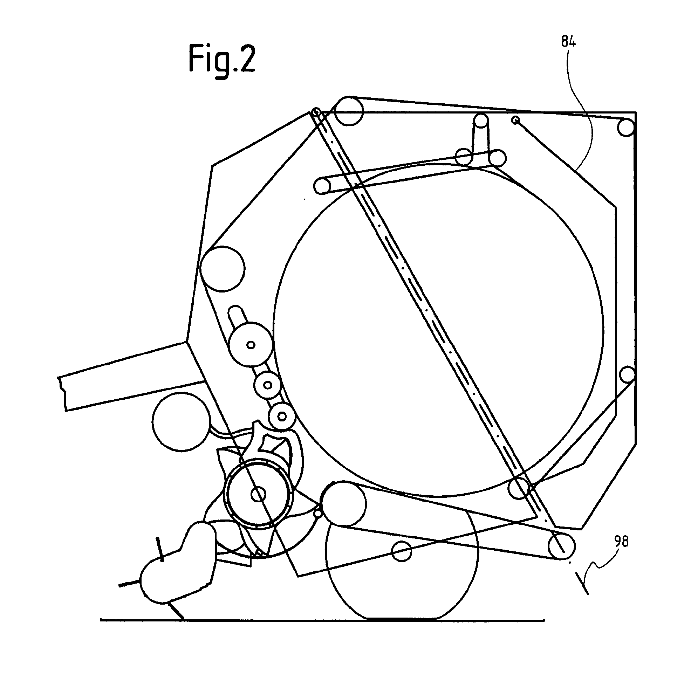

Der Träger 32 ist in der Art einer biegesteifen Schiene ausgebildet und doppelt vorgesehen, nämlich an jeder Seitenwand 22, wobei nicht gezeigte aber hinlänglich bekannte Versteifungselemente zwischen beiden vorgesehen sind. Der Träger 32 ist in dem Ausführungsbeispiel nach den Figuren 1 und 2 starr mit einer geringen Neigung nach vorne und in dem Ausführungsbeispiel nach Figur 3 um eine sich quer zu der Fahrtrichtung der Rundballenpresse 10 verlaufende, horizontale Schwenkachse 66 in einer vertikalen Ebene schwenkbar. Die Schwenkachse 66 befindet sich zwischen den Enden des Trägers 32 und in diesem Ausführungsbeispiel ungefähr in seiner Mitte, so daß er sich wie eine Wippe bewegen kann. Nach einer anderen nicht dargestellten Ausführungsform ist der Träger 32 um eine mit der Drehachse der unteren Walze 34 zusammenfallende Schwenkachse schwenkbar.

Die Walzen 34 lassen sich unterscheiden in eine untere, eine mittlere und eine obere Walze 34, wenn man von drei Walzen 34 ausgeht, was jedoch nicht zwingend ist. Die Walzen 34 sind drehbar zwischen und in den beiden Trägern 32 aufgenommen und erstrecken sich über die gesamte Breite des Preßraums 42. Die Anordnung ist derart gewählt, daß die dem Rundballen 44 zugelegenen Flächen bzw. Kanten auf einer gekrümmten Fläche liegen, so daß dann, wenn der Rundballen 44 im wesentlichen seine volle Größe erreicht hat, sie dem Durchmesser des Rundballens 44 folgt. Die Durchmesser der unteren und der mittleren Walze 34 sind größer als der der oberen Walze 34. Die untere Walze 34 befindet sich stets nahe an der rückwärtigen Kante des Deckels 50. Die Drehachse der mittleren Walze 34 bildet zugleich die Schwenkachse 66, was jedoch nicht zwingend ist und in anderen Ausführungsbeispielen anders gelöst werden kann. Insbesondere kann die Schwenkachse 66 nach unten, oben, vorne oder hinten versetzt sein. Zwischen der mittleren und der oberen Walze 34 besteht ein Spalt, durch den das Zugmittel 40 verläuft. Die untere und die mittlere Walze 34 bilden unmittelbar einen Teil der Wandung des Preßraums 42 und werden von dem darin gepreßten Gut direkt beaufschlagt. Anstatt des Träger 32 mit Walzen 34 kann auch eine einzige Walze 34 oder nur eine Umlenkrolle 36 vorgesehen werden, um die das Zugmittel 40 verläuft.

Mehrere Rollen 36, von denen wenigstens eine angetrieben wird, erstrecken sich zwischen den Seitenwänden 22 und sind teilweise in diesen drehbar und parallel zu den Walzen 34 gelagert. Gemäß der Darstellung in Figur 1 sind vier Rollen 36 angeordnet, um die das Zugmittel 40 endlos umlaufen kann. Zwei der vier Rollen 36 sind in den Zwischenwänden 22 ortsfest und zwei sind auf der Spannvorrichtung 38 und mit dieser beweglich gelagert.

Die Spannvorrichtung 38 enthält in im wesentlichen bekannter Weise einen Arm 68, ein Lager 70 und einen Kraftspeicher 72.

Der Arm 68 wird von einer massiven Stahlschiene oder -rohr gebildet und ist wie der Träger 32 doppelt ausgeführt, d. h. im Bereich beider Seitenwände 22 vorhanden. Der Arm 68 erstreckt sich nahezu über die gesamte Länge der Seitenwand 22 und ist an dem dem Lager 70 abgelegenen Endbereich mit zwei Rollen 36 versehen, die in der radialen Richtung einen Abstand zueinander aufweisen. Diese Rollen 36 befinden sich in von dem Zugmittel 40 umschlossenen Innenräumen. Der Arm 68 erstreckt sich an dem dem Lager 70 zugelegenen Endbereich über das Lager 70 hinaus und ist leicht abgewinkelt, um einen Hebelarm 74 zu bilden.

Das Lager 70 nimmt den Arm 68 an dem den Rollen 36 gegenüberliegenden Endbereich vertikal schwenkbar auf. Hierzu können an jeder Seitenwand 22 jeweils ein separates Lager 70 oder ein sich zwischen den Seitenwänden 22 erstreckendes Lager vorgesehen werden.

Der Kraftspeicher 72 ist in diesem Ausführungsbeispiel von einer Schraubenzugfeder gebildet; statt dessen könnte auch ein Hydraulikzylinder mit Gasdruckspeicher oder Drossel, eine andere Federart, eine Kombination daraus oder dergleichen verwendet werden. Der Kraftspeicher 72 ist einenends an den Hebelarm 74 und anderenends an einem Halter 76 befestigt, der ortsfest an dem Rahmen 12 bzw. der Seitenwand 22 angreift. Normalerweise ist der Kraftspeicher 72 wenigstens geringfügig vorgespannt. Es ist aber auch eine Ausführungsform denkbar, bei der der Widerstand durch den Kraftspeicher 72 veränderbar ist, z. B. mittels einer steuerbaren Drossel, um etwa eine unterschiedliche Verdichtung über dem Durchmesser des Rundballens 44 zu erzeugen, so daß ein sog. Weichkern erreicht wird. Die Wirkungsrichtung des Kraftspeichers 72 ist so gewählt, daß der Arm 68 mit seinen Rollen 36 stets zu dem Einlaß 58 hin gedrängt wird, d. h. im Sinne eines möglichst kleinen Preßraums 42.

Das Zugmittel 40 ist in diesem Ausführungsbeispiel aus mehreren parallel zueinander verlaufenden schmalen Riemen gebildet, wie dies an sich bekannt ist. Das Zugmittel 40 ist in sich geschlossen und verläuft durch den Rahmen 12 und die Klappe 14. Allerdings könnten auch zwei voneinander getrennte Zugmittel in dem Rahmen 12 und der Klappe 14 vorgesehen werden, wie dies an sich bekannt ist. Das Zugmittel 40 verläuft beginnend bei der vorderen Rolle 36 auf dem Arm 68 durch den Spalt zwischen der oberen und der mittleren Walze 34 auf dem Träger 32, über eine vordere untere, eine vordere obere, dann in der Klappe 14 über eine mittlere obere, eine rückwärtige obere, eine rückwärtige untere, eine bewegliche, die rückwärtige Rolle auf dem Arm 68 und eine obere Rolle 36, wobei die bewegliche Rolle mit 90 bezeichnet und weiter unten näher beschrieben wird. Aufgrund des Schwenkvermögens des Arms 68 und des Trägers 32 kann der sich zwischen dem Spalt und der Rolle 36 auf dem Arm 68 erstreckende Bereich des Zugmittels 40 ausgelenkt und in der Größe verändert werden. Dieser Bereich stellt einen Teil der Wandung des Preßraums 42 dar und wird direkt von dem Gut in dem Preßraum 42 beaufschlagt.

Der Preßraum 42 ist von variabler Größe und wird umgeben von dem Einlaß 58, den Walzen 34 auf dem Träger 32, dem Teil des Zugmittels 40, der sich zwischen dem Spalt und der Rolle 36 auf dem Arm 68 erstreckt, einem Zugmittelabschnitt zwischen der rückwärtigen Rolle 36 auf dem Arm 68 und der beweglichen Rolle 90 und dem Bodenförderer 30. An den Stirnseiten wird der Preßraum 42 von den Seitenwänden 22 teilweise geschlossen.

Der Rundballen 44 wird aus Erntegut gebildet, das spiralförmig aufgewickelt wird und letztlich eine Größe erreicht, wie sie in Figur 2 gezeigt ist. Zum Entladen des Rundballens 44 aus dem Preßraum 42 wird die Klappe 14 angehoben, so daß der Rundballen 44 den Bodenförderer 30 hinunter auf den Boden rollen kann. Die Dichte des Rundballens 44 wird durch die Spannung der Zugmittel 40 erreicht, die von dem Kraftspeicher 72 aufgebracht wird.

Die Klappe 14 ist in einem Lager 78 vertikal schwenkbar an den Rahmen 12 angeschlossen, wobei die Schwenkbewegung von nicht gezeigten aber hinlänglich bekannten Hydraulikzylindern hervorgerufen wird. Die Klappe 14 enthält zwei Seitenwände 80, die genannten Rollen 36, einen Teil des endlosen Zugmittels 40, zwei Arme 84 und die bewegliche Rolle 90.

Die Seitenwände 80 verlaufen in derselben Ebene wie die Seitenwände 22 des Rahmens 12 und schließen den Preßraum 42 an seinen noch offenen Stirnseiten ab. Zwischen den Seitenwänden 80 erstrecken sich nicht gezeigte aber bekannte Versteifungselemente.

Die Rollen 36, in diesem Ausführungsbeispiel vier, sind ortsfest aber drehbar in den Seitenwänden 80 aufgenommen und erstrecken sich parallel zu den Rollen 36 im Rahmen 12 über die gesamte Breite des Preßraums 42.

Jeder Arm 84 ist im Bereich der oberen Kante der Klappe 14 und ungefähr mittig in einem Lager 92 vertikal schwenkbar angeschlossen und weist von der Seite der Rundballenpresse 10 aus gesehen eine wannenartige oder U-förmige Form auf. Der sich aufgrund dieser Form ergebende Innenraum des Arms 84 ist so groß, daß der Rundballen 44 in seiner maximalen Größe mit einem Teil seines Umfangs darin eintauchen kann, d. h. die "Wanne" ist nach vorne offen.

An seinem unteren und vorderen Ende nimmt der Arm 84 die bewegliche Rolle 90 drehbar auf, die sich auf ihrem Weg entlang der Oberfläche des Bodenförderers 30 bewegt, wenn der Durchmesser des Rundballens 44 zunimmt. Über die bewegliche Rolle 90 ist das Zugmittel 40 geführt, so daß die bewegliche Rolle 90 und der über sie führende Zugmittelabschnitt stets in direktem bzw. indirektem Kontakt mit dem Rundballen 44 steht.

Zwischen dem Lager 92 und der beweglichen Rolle 90 greift an dem Arm 84 ein weiterer Kraftspeicher 94 an, der in gleicher Weise wie der Kraftspeicher 72 ausgeführt sein kann, d. h. als Schraubenzugfeder, als Hydraulikzylinder mit Drossel oder Druckspeicher, etc.. Der Kraftspeicher 94 ist an seinem dem Arm 84 abgelegenen Ende in einem Halter 96 aufgenommen, der an den Seitenwänden 80 befestigt ist. Der Kraftspeicher 94 ist so vorgespannt, daß er den Arm 84 stets zu dem Einlaß 58 hin drückt.

Die Seitenwände 22 und 80 stoßen in einer Trennungsebene 98, die sich von dem Lager 78 vorne oben zu der rückwärtigen Tragrolle 64 hinten unten erstreckt und eine Neigung zu der horizontalen Aufstandsfläche von ca. 60 Grad aufweist, aufeinander.

Nach alledem ergibt sich folgende Funktion der Rundballenpresse 10 gemäß den Figuren 1 und 2.

In einer nicht gezeigten Situation, in der sich der Arm 68 aufgrund der Wirkung des Kraftspeichers 72 in seiner untersten Stellung befindet, nimmt der Arm 84 und die bewegliche Rolle 90 ungefähr die in Figur 1 gezeigte Stellung ein. Die Trume zwischen der oberen Walze 34 auf dem Träger 32 und den Rollen 36 auf dem Arm 38 bzw. der beweglichen Rolle 90 auf dem Arm 84 erstrecken sich im wesentlichen in einer Ebene von vorne oben nach hinten unten unter einer Neigung von ca. 45 Grad. Der Preßraum 42 nimmt in diesem Fall nahezu eine Dreiecksform ein, deren Hypothenuse von den beiden vorgenannten Trumen gebildet wird und das nahezu auf einer seiner Spitzen steht. In diesem Fall weist der Preßraum 42 das kleinste Volumen auf.

Zum Beginn des Preßvorgangs wird die Rundballenpresse 10 über ein Feld mit z. B. in Schwaden abgelegtem Erntegut bewegt und das Erntegut mittels des Aufnehmers 24 vom Boden aufgesammelt und dem Schneidwerk 28 zugeführt. Der Rotor 52 fördert das Gut unterschlächtig und gegebenenfalls an den Messern 54 vorbei in den Preßraum 42, wo es in Berührung mit den in gleicher Richtung umlaufenden Trumen des Zugmittels 40 gelangt. Aufgrund der drehbaren Lagerung und gegebenenfalls des Antriebs der Tragrollen 64 und Walzen 34 zusammen mit der packenden Oberfläche der Zugmittel 40, 82 wird das Erntegut bei ausreichender Menge in Drehung versetzt, und zwar im Uhrzeigerdrehsinn mit Blick auf die Figuren der Zeichnung. In einer anderen Ausführungsform kann der Rundballen 44 auch entgegen dem Uhrzeigerdrehsinn aufgewickelt werden.

Mit zunehmender Erntegutmenge erreicht die Rundballenpresse 10 den in Figur 1 dargestellten Betriebszustand, in dem der Arm 68 in geringem Maß gegen die Wirkung des Kraftspeichers 72 nach oben bewegt ist und somit die Trume nach oben auslenkt, so daß sie aus der gemeinsamen Ebene ausscheren und eine stumpfe Dachform einnehmen. Im Ausführungsbeispiel der Figur 3 wird der Träger 32 um die Schwenkachse 66 geringfügig entgegen dem Uhrzeigerdrehsinn geschwenkt, so daß sich seine untere Walze 34 in den Preßraum 42 hinein bewegt. Der Rundballen 44 stützt sich in dieser Situation im wesentlichen auf der vorderen Tragrolle 64 des Bodenförderers 30 ab.

Mit weiter zugeführtem Erntegut erreicht der Rundballen 44 die in Figur 2 gezeigte Größe. In diesem Betriebszustand ist der Arm 68 vollkommen nach oben geschwenkt und der Kraftspeicher 72 vollkommen gespannt, so daß die größtmögliche Dichte auf der Umfangsfläche des Rundballens 44 erreicht wird. Da der Bodenförderer 30 nicht ausweichen und der Träger 32 mit seinen Walzen 34 entweder ortsfest oder im Falle der Figur 3 nur begrenzt schwenken kann, baut sich der Rundballen 44 nach oben und hinten auf, so daß seine Umfangsfläche auf das Trum zwischen der rückwärtigen Rolle 36 auf dem Arm 68 und der beweglichen Rolle 90, bzw. auf die bewegliche Rolle 90 selbst, wenn auch nur indirekt, wirkt. Der Arm 84 weicht entgegen der Kraft des Kraftspeichers 94 aus und bewegt sich ausgehend von einer dem Einlaß 58 nahen oder zugelegenen Stellung rückwärtig bis zur Trennungsebene 98 und geringfügig in die Klappe 14 hinein in eine dem Einlaß 58 abgelegene Stellung. Währenddessen stützt sich der Rundballen 44 zunehmend auf dem Bodenförderer 30 ab.

Zum Auswerfen des Rundballens 44 wird die Klappe 14 und mit ihr der Arm 84 mit Blick auf die Zeichnung entgegen dem Uhrzeigerdrehsinn angehoben, so daß der Rundballen 44 auf der nach hinten geneigten Oberfläche des Bodenförderers 30 aus dem in dem Rahmen 12 befindlichen Teil des Preßraums 42 herausrollen kann. Es ist ersichtlich, daß sowohl aufgrund der geneigten Trennungsebene 98, als auch aufgrund der Tatsache, daß sich die bewegliche Rolle 90 nach hinten bewegt, schneller und mit einem geringeren Stellweg der Klappe 14 eine Öffnung erreicht wird, durch die der Rundballen 44 entweichen kann. Beide Maßnahmen führen für sich gesehen bereits zu dem Erfolg und können unabhängig voneinander durchgeführt werden. Zusammen genommen erhöhen sie die jeweilige Wirkung. Aufgrund der annähernd dreieckigen Form der Klappe 14 gibt es kaum eine vordere störende Kante und die Klappe 14 braucht nicht so weit angehoben zu werden, um über den auf dem Boden liegenden Rundballen 44 bewegt werden zu können, wenn die Rundballenpresse 10 zum Fortsetzen des Preßvorgangs fortbewegt wird.

Die Figuren 3 und 4 zeigen Ausführungsbeispiele der Erfindung, die dem Ausführungsbeispiel nach den Figuren 1 und 2 weitestgehend entsprechen und auch die gleiche Funktion aufweisen.

Der Unterschied zwischen dem Ausführungsbeispiel der Figuren 1 und 2 und dem aus Figur 3 besteht darin, daß gemäß Figur 3 der Träger 32 um eine horizontale Schwenkachse 66 beweglich ist.

Der Unterschied zwischen dem Ausführungsbeispiel der Figuren 1 und 2 und dem aus Figur 4 besteht darin, daß gemäß Figur 4 der Bodenförderer 30 nicht aus zwei Tragrollen 64 und einem darüber verlaufenden endlosen Zugmittel 82, sondern aus einer Mehrzahl parallel zueinander gelegener Tragrollen 64 besteht, die jedoch die gleiche nach hinten abfallende Oberfläche aufweisen, was unter anderem durch nach hinten abnehmende Durchmesser erreicht wird.

In einem nicht gezeigten Ausführungsbeispiel ist vorgesehen, daß der Bodenförderer 30 um die Drehachse der vorderen Tragrolle 64 hinten nach unten schwenken kann, was mittels eines Hydraulikzylinders gesteuert werden kann. Auf diese Weise wird eine dritte Maßnahme zur Verfügung gestellt, um den erforderlichen Öffnungsquerschnitt schnell zu erreichen.

## Patentansprüche

1. Rundballenpresse (10) mit einem Rahmen (12) und einer vertikal schwenkbar an diesem angebrachten Klappe (14), in denen ein Preßraum (42) gebildet wird, der teilweise von einem Zugmittel (40) umfaßt wird, das über mehrere Rollen (36), (90) geführt ist, **dadurch gekennzeichnet, daß** eine der Klappe (14) zugeordnete untere Rolle (90) aus einer einem Einlaß (58) in den Preßraum (42) zugelegenen in eine diesem abgelegene Stellung radial beweglich ist.

2. Rundballenpresse nach Anspruch 1, **dadurch gekennzeichnet, daß** zwischen dem Rahmen (12) und der vertikal schwenkbar an ihm angebrachten Klappe (14) eine Trennungsebene (98) verläuft, die sich von vorne oben nach rückwärtig unten geneigt erstreckt.

3. Rundballenpresse nach Anspruch 1 oder 2, **dadurch gekennzeichnet, daß** der Preßraum (42) an seiner Unterseite von einem Bodenförderer (30) begrenzt wird, der in der Auswurfrichtung des Rundballens (44) abfallend ausgebildet und/oder angeordnet ist.

4. Rundballenpresse nach einem oder mehreren der vorherigen Ansprüche, **dadurch gekennzeichnet, daß** der Preßraum (42) umfangsseitig teilweise von Walzen (34) umgeben wird, die auf einem schwenkbaren Träger (32) gelagert sind.

5. Rundballenpresse nach Anspruch 4, **dadurch gekennzeichnet, daß** der Träger (32) um eine Schwenkachse (66) schwenkbar ist, die sich zwischen seinen Enden befindet.

6. Rundballenpresse nach einem oder mehreren der vorherigen Ansprüche, **dadurch gekennzeichnet, daß** der Bodenförderer (30) mehrere parallel zueinander verlaufende drehbare Tragrollen (64) und/oder ein Zugmittel (82) auf Tragrollen (64) enthält.

7. Rundballenpresse nach einem oder mehreren der vorherigen Ansprüche, **dadurch gekennzeichnet, daß** der Bodenförderer (30) vertikal schwenkbar ausgebildet ist.

8. Rundballenpresse nach einem oder mehreren der vorherigen Ansprüche, **dadurch gekennzeichnet, daß** das Zugmittel (40) zwischen zwei auf dem Träger (32) drehbar aufgenommenen Walzen (34) hindurchgeführt ist und auf einer der Walzen (34) teilumfangsmäßig aufliegt.

9. Rundballenpresse nach einem oder mehreren der vorherigen Ansprüche, **dadurch gekennzeichnet, daß** die bewegliche Rolle (90) auf einem gekrümmten, geknickten oder gebogenen Arm (84) gelagert ist, dessen Krümmung größer ist als der Umfang des Rundballens (44).

10. Rundballenpresse nach einem oder mehreren der vorherigen Ansprüche, **dadurch gekennzeichnet, daß** der Preßraum (42) im wesentlichen von einem Satz Zugmittel (40) umgeben wird, das sich zwischen der beweglichen Rolle (90) und einer oberen Walze (34) auf dem Träger (32) erstreckt.
